(19) Europäisches Patentamt
European Patent Office
Office européen des brevets

(11) Veröffentlichungsnummer: **0 027 194**
**B1**

(12) # EUROPÄISCHE PATENTSCHRIFT

(45) Veröffentlichungstag der Patentschrift: **09.02.83**

(51) Int. Cl.[3]: **C 01 B 7/01**, C 01 D 7/16

(21) Anmeldenummer: **80105858.7**

(22) Anmeldetag: **27.09.80**

(54) **Verfahren zur Herstellung von Natriumhydrogencarbonat und Chlorwasserstoff.**

(30) Priorität: **06.10.79 DE 2940628**
**19.08.80 DE 3031213**

(43) Veröffentlichungstag der Anmeldung: **22.04.81 Patentblatt 81/16**

(45) Bekanntmachung des Hinweises auf die Patenterteilung: **09.02.83 Patentblatt 83/6**

(84) Benannte Vertragsstaaten: **AT BE CH FR GB IT LI LU NL SE**

(56) Entgegenhaltungen:
**DE-A-2 633 640**
**FR-A-1 045 657**
**FR-A-1 147 897**
**FR-A-1 300 394**
**GB-A-1 082 436**
**CHEMICAL ABSTRACTS, Band 83, Nr. 26, 29. Dezember 1975, Seite 117, Zusammenfassung Nr. 208 079 d, Columbus, Ohio, US, R. BLUMBERG et al.: »Interesting aspects in the development of a novel solvent extraction process for producing sodium bicarbonate«**

(73) Patentinhaber: **CHEMISCHE WERKE HÜLS AG, Postfach 1320, D-4370 Marl 1 (DE)**

(72) Erfinder: **Hentschel, Bernhard, Dr., Breddenkampstrasse 43, D-4370 Marl (DE)**
Erfinder: **Ziebarth, Jürgen, Alberskamp 1, D-4370 Marl (DE)**
Erfinder: **Coenen, Alfred, Dr., Altes Forsthaus, D-5471 Maria Laach (DE)**
Erfinder: **von Praun, Ferdinand, Dr., Am Schmöningsberg 8, D-4358 Haltern (DE)**
Erfinder: **Kosswig, Kurt, Dr., Hoechster Strasse 10, D-4370 Marl (DE)**

**EP 0 027 194 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Herstellung von Natriumhydrogencarbonat und Chlorwasserstoff

Gegenstand der Erfindung ist ein Verfahren zur Herstellung von Natriumhydrogencarbonat und Chlorwasserstoff durch Umsetzung einer wäßrigen Natriumchloridlösung mit Kohlendioxid unter Druck in Gegenwart eines Amins sowie eines organischen Lösemittels.

Ein Großteil der Weltsodaerzeugung erfolgt durch Calcinierung von Natriumhydrogencarbonat, das bei Ammoniaksoda-Verfahren als Zwischenprodukt nach der Gleichung

$$NaCl + CO_2 + H_2O + NH_3 \rightarrow NaHCO_3 + NH_4Cl$$

neben Ammoniumchlorid anfällt. Aus der letztgenannten Verbindung wird das Ammoniak im allgemeinen durch Behandlung mit gebranntem Kalk nach der Gleichung

$$2\,NH_4Cl + CaO \rightarrow 2\,NH_3 + CaCl_2 + H_2O$$

zurückgewonnen. Hierbei fallen dann große Mengen von Calciumchlorid an, die gemeinsam mit dem nicht umgesetzten Natriumchlorid als Ablauge in die Vorfluter gegeben werden. Der Nachteil des Ammoniaksoda-Verfahrens besteht somit im wesentlichen darin, daß das gesamte Chlor des umgesetzten Natriumchlorids in Form des wertlosen Calciumchlorids ebenso wie das unumgesetzte Natriumchlorid verlorengeht.

Ähnlich wie beim Ammoniaksoda-Verfahren geht auch bei dem Verfahren der GB-A 1 082 436, nach dem u. a. Alkalicarbonate aus Alkalichloriden und Kohlensäure in Gegenwart eines in einem organischen Lösemittel gelösten stark basischen Amins hergestellt werden können, das eingesetzte Chlor verloren. Aus dem jeweils gebildeten Aminhydrochlorid wird nämlich nur das Amin durch eine Behandlung der organischen Phase mit einem alkalisch wirkenden Reagenz zwecks Rückführung in den Prozeß gewonnen.

Aus der IL-A 33 552 ist es bekannt, Natriumhydrogencarbonat und Chlorwasserstoff in Abänderung des Ammoniaksoda-Verfahrens dadurch herzustellen, daß man zunächst eine heterogene Mischung aus einem in einem polaren organischen Lösemittel gelösten Amin und einer Natriumchloridsole mit Kohlendioxid begast. Aus der wäßrigen Phase fällt das Natriumhydrogencarbonat aus, das entstehende Aminhydrochlorid bleibt in der organischen Phase gelöst und wird abgetrennt. Das Amin wird sodann aus seinem Hydrochlorid durch Behandeln mit wäßrigem Magnesiumhydroxid regeneriert, das erhaltene wäßrige Magnesiumchlorid bei Temperaturen bis ca. 500°C unter Bildung von Magnesiumoxid, Magnesiumoxichlorid und Chlorwasserstoff zerlegt. Der Chlorwasserstoff fällt hierbei allerdings verfahrensbedingt nicht ausschließlich wasserfrei an, so daß er nur einer begrenzten technischen Verwertung zugeführt werden kann. Ein weiterer Nachteil dieses Verfahrens sind die bei der Chlorwasserstoffgewinnung erforderlichen Temperaturen und die damit verbundene verstärkte Korrosionsgefahr sowie der Einsatz von Magnesiumsalzen als zusätzliche Hilfsstoffe.

Aufgabe der vorliegenden Erfindung war es daher, ein wirtschaftliches und umweltfreundliches Verfahren zur Herstellung von Natriumhydrogencarbonat und Chlorwasserstoff aus Natriumchlorid und Kohlensäure zu entwickeln, das es zudem gestattet, den Chlorwasserstoff unter milderen und technisch einfacheren Bedingungen als nach dem Verfahren der IL-A 33 552 und darüber hinaus gegebenenfalls in wasserfreier Form zu gewinnen.

Diese Aufgabe wurde durch die in den Ansprüchen beschriebenen Maßnahmen gelöst.

Man geht dabei in der Verfahrensstufe 1, die im nachfolgenden auch als Carbonisierungsstufe bezeichnet wird, von einer Mischung aus, die im wesentlichen eine wäßrige Natriumchloridlösung, ein Amin und ein unpolares organisches Lösemittel enthält. Weitere Bestandteile können z. B. gewisse Mengen gelöstes und ungelöstes Natriumhydrogencarbonat, ungelöstes Natriumchlorid und aktive sowie inaktive Abbauprodukte der Amine sein.

Als Amine werden einzeln oder im Gemisch solche verwendet, die eine solche Basizität besitzen, daß sie sowohl in der Carbonisierungsstufe Hydrochloride bilden, als auch in der Thermolysestufe (Verfahrensstufe 4) mit ausreichender Geschwindigkeit möglichst vollständig Chlorwasserstoff abspalten, wobei zur Vermeidung von Aminzersetzung keine zu hohe Temperatur (>300°C) erforderlich sein darf. Es zeigte sich, daß diese Voraussetzungen einmal von tertiären nicht aromatischen Aminen, die in der Summe der stickstoffgebundenen Liganden 14 bis 39, vorzugsweise 18 bis 36 Kohlenstoffatome, enthalten, wobei alle Seitenketten unverzweigt primär sein können, davon jedoch höchstens eine Methylgruppe vorhanden sein darf, oder wobei die unverzweigten primären Seitenketten ganz oder teilweise durch verzweigte primäre ersetzt sein können unter der Voraussetzung, daß die Verzweigungsstelle mindestens 3 Kohlenstoffatome vom zentralen Stickstoffatom entfernt liegt, oder wobei zwei der Seitenketten verzweigt primär mit der Verzweigung in 2-Stellung sein können und die dritte Seitenkette unverzweigt primär ist, oder wobei eine Seitenkette verzweigt primär mit der Verzweigung in 2-Stellung sein kann, während die anderen Seitenketten entweder beide unverzweigt primär oder nur eine unverzweigt primär und die andere unverzweigt sekundär oder alicyclisch sein können, oder wobei zwei der unverzweigt primären

Seitenketten durch Cyclohexylgruppen ersetzt sein können, und zum anderen von Gemischen anderer tertiärer nicht aromatischer Amine mit 14 bis 39 Kohlenstoffatomen, in denen die oben definierten Amine gewichtsmäßig überwiegen, erfüllt werden.

Geeignete Amine sind beispielsweise Tri-n-hexylamin, Tri-n-octylamin, Tri-n-laurylamin, Tri-(3,5,5-trimethylhexyl)-amin, Tri-(3,5,5-trimethyloctyl)-amin, Tri-(3,5,5-trimethyldecyl)-amin, N-Octyl-di-(2-ethylhexyl)-amin, N,N-Dioctyl-(2-ethylhexyl)-amin, N-Octyl-N-(4-heptyl)-(2-ethylhexyl)-amin, N-Octyl-N-(4-heptyl)-cyclohexylamin, N Octyl-N-(2-ethylhexyl)-cyclohexylamin, N-Octyl-dicyclohexylamin und N-Hexadecyl-dicyclohexylamin.

Weiterhin können als tertiäre Amine auch N-Alkyl-azacycloalkane mit insgesamt mindestens 14 Kohlenstoffatomen verwendet werden. Die allgemeine Formel für solche Amine lautet

$$(CH_2)_n \quad N-R ,$$

wobei n eine ganze Zahl von 4 bis 12 bedeutet, R für eine Alkylgruppe mit maximal 18 Kohlenstoffatomen steht und die Methylengruppen gegebenenfalls durch Alkylgruppen mit maximal 6 Kohlenstoffatomen in der Summe der Alkylgruppen substituiert sind.

Geeignete N-Alkyl-azacycloalkane sind beispielsweise N-Dodecyl-pyrrolidin, N-Hexadecyl-pyrrolidin, N-Octadecyl-pyrrolidin, N-Dodecyl-piperidin, N-Tetradecyl-piperidin, N-Hexadecyl-piperidin, N-Octadecyl-piperidin, N-Octylazacycloheptan, N-Dodecyl-azacycloheptan, N-Octadecyl-azacycloheptan, N-Octyl-3,3,5-trimethyl-azacycloheptan, N-Octyl-3,5,5-trimethyl-azacycloheptan, N-Dodecyl-3,3,5-trimethyl-azacycloheptan, N-Dodecyl-3,5,5-trimethyl-azacycloheptan, N-Octadecyl-3,3,5-trimethyl-azacycloheptan, N-Octadecyl-3,5,5-trimethyl-azacycloheptan, N-Octyl-azacyclononan, N-Dodecyl-azacyclononan, N-Octadecyl-azacyclononan, N-Hexyl-azacyclotridecan, N-Octyl-azacyclotridecan, N-Dodecyl-azacyclotridecan und N-Octadecyl-azacyclotridecan.

Es ist durchaus möglich, daß auch noch andere, nicht unter die Abgrenzungen fallende Amine in Kombination mit ausgewählten organischen Lösemitteln bei erfindungsgemäßen Verfahren eingesetzt werden können. Die genannten Amine sind daher zwar als typisch, aber weder als optimal noch als begrenzend aufzufassen.

Unter einem unpolaren Lösemittel wird im Rahmen der vorliegenden Erfindung ein solches organisches Lösemittel verstanden, das gemäß den Angaben in der Literatur oder aufgrund der Messung nach einem in der Literatur beschriebenen Verfahren (Landolt-Börnstein, Physikalisch-chemische Tabellen, 5. Auflage, 2. Ergänzungsband (1931), Seiten 74 bis 76) ein Dipolmoment ($\mu$) gleich Null oder unwesentlich größer Null (maximal 0,7 debyes) besitzt.

Geeignete unpolare Lösemittel aus der Gruppe der aromatischen, araliphatischen und aliphatischen Kohlenwasserstoffe, die im allgemeinen einen Siedepunkt über 140°C, vorzugsweise über 170°C, haben sollen, sind beispielsweise Cymole, 1,2,3-Trimethylbenzol, 1,2,4-Trimethylbenzol, Diethylbenzol, 1,2,4-Triethylbenzol, 1,3,5-Triethylbenzol, 1,2,3,4-Tetramethylbenzol, 1,2,3,5-Tetramethylbenzol, 5-tert.-Butyl-m-xylol, 3-Phenylpentan, Dodecylbenzol, Decan, Undecan, Dodecan, Tetradecan, Decalin und Tetralin, wobei Dodecan besonders bevorzugt ist.

Eine bevorzugte Ausführungsform des erfindungsgemäßen Verfahrens besteht darin, daß man in der Verfahrensstufe 1 neben dem unpolaren bzw. weitgehend unpolaren Lösemittel noch ein polares organisches Lösemittel einsetzt. Geeignet sind alle polaren organischen Lösemittel mit einem Siedepunkt von 140 bis 300°C, vorzugsweise 200 bis 260°C, die unter den gegebenen Reaktionsbedingungen gegen Wasser, Chlorwasserstoff, Amine und Temperaturbelastung inert bzw. weitgehend inert sind. Dafür geeignet sind insbesondere Ether, nicht kondensationsfähige Ketone und Benzolderivate, wie o- und m-Dichlorbenzol und Nitrobenzol. Typische Vertreter sind z. B. Diphenylketon, o-Dichlorbenzol und Diphenylether. Besonders bevorzugt ist der Diphenylether.

Das gewichtsmäßige Verhältnis zwischen dem unpolaren und dem polaren organischen Lösemittel kann zwischen 99 : 1 und 1 : 99 liegen. Im allgemeinen liegt es jedoch zwischen 9 : 1 und 1 : 9, vorzugsweise 2 : 3 und 3 : 2.

Zur Erzielung optimaler Umsätze in der Verfahrensstufe 1 ist es zweckmäßig, die Natriumchloridlösung möglichst in gesättigter Form einzusetzen und während der Reaktion eine merkliche Abnahme der Konzentration zu verhindern. Das Mengenverhältnis (Verhältnis der Gewichtsmengen) der eingesetzten organischen Phase(n), bestehend aus Amin, unpolarem und gegebenenfalls polarem organischen Lösemittel zur wäßrigen Natriumchloridlösung wird auf der einen Seite beschränkt durch die Ausbeuteminderung infolge der Abnahme der Natriumchloridkonzentration durch die Reaktion und auf der anderen Seite durch den vorhandenen, wenn auch sehr geringen Austrag von Amin durch die Sole. Ersteres läßt sich z. B. durch Zugabe von festem Natriumchlorid zum Reaktionsgefäß oder durch einen großen Soleüberschuß vermeiden, während ein Aminverlust durch eine Kreisfahrweise der Sole über einen NaCl-Sättiger verhindert wird. Im allgemeinen liegt das Mengenverhältnis der organischen Phase(n) zur Sole bei 1 : 9 bis 9 : 1, vorzugsweise 1 : 2 bis 2 : 1.

Das gewichtsmäßige Verhältnis zwischen dem unpolaren organischen Lösemittel bzw. der Mischung aus unpolarem und polarem organischen Lösemittel und dem Amin kann bei dem vorliegenden Verfahren in den Grenzen von 20 : 1 bis 0,2 : 1, vorzugsweise von 5 : 1 bis 0,5 : 1, variiert werden. Durch einige orientierende Versuche kann vom Fachmann leicht ermittelt werden, welches

Lösemittel-Amin-Verhältnis in jedem speziellen Fall am besten geeignet ist. So kann es beispielsweise zweckmäßig sein, eine gewisse Konzentration an Lösemittel(n) einzustellen, um eine zu hohe thermische Belastung des Amins in der Verfahrensstufe 4 zu vermeiden. Dasselbe Ziel erreicht man jedoch auch durch Hydrochloridspaltung im Vakuum, wobei die Lösemittelmengen im Sumpf der Spaltkolonne relativ klein (< 20%) sein können.

Bei der Durchführung des erfindungsgemäßen Verfahrens geht man im allgemeinen so vor, daß man in die Mischung, die im wesentlichen eine wäßrige Natriumchloridlösung, ein Amin, ein unpolares organisches Lösemittel und gegebenenfalls ein polares Lösemittel enthält, eine gewisse Zeit lang Kohlendioxid unter Druck einleitet. Im allgemeinen arbeitet man bei $CO_2$-Drücken von 5 bis 40 bar, vorzugsweise 15 bis 30 bar. Dabei ist es nicht erforderlich, daß der gewählte Druck innerhalb der angeführten Bereiche nur durch das Kohlendioxid aufgebaut wird, sondern es ist auch möglich, daß das Kohlendioxid zusammen mit inerten Gasen, wie z. B. Stickstoff oder Argon, der Carbonisierungsstufe zugeführt wird. Art und Menge der einzelnen Bestandteile in der Verfahrensstufe 1 werden in einem oder mehreren orientierenden Vorversuchen festgelegt. Während und gegebenenfalls auch noch eine Zeit lang nach der Einleitung von Kohlendioxid, ist dafür Sorge zu tragen, daß eine gute gegenseitige Durchmischung der einzelnen Phasen, z. B. mit Hilfe eines Rührwerks oder eines intensiven Gasstroms, stattfindet. Zur Verbesserung der Ausbeute ist es zweckmäßig, in der Carbonisierungsstufe bei Temperaturen unter 25°C zu arbeiten, wobei die untere Temperaturgrenze durch den Taupunkt des Kohlendioxids, durch das Auskristallisieren von Lösemittel, Amin oder Aminhydrochlorid gegeben ist.

In der Verfahrensstufe 2 erfolgt sodann die Phasentrennung. Dabei hat es sich als vorteilhaft erwiesen, die Trennung der organischen Phase von der wäßrigen und der festen Phase unter dem gleichen Druck, vorzugsweise $CO_2$-Druck, wie er in der Verfahrensstufe 1 eingestellt war, durchzuführen.

Je nach Art und Menge der organischen Bestandteile können auch zwei organische Phasen auftreten. Es ist dann eine Frage der Wirtschaftlichkeit, ob die Phasen gemeinsam weiterverwendet werden oder nur die HCl-reiche Phase weiterverarbeitet und die andere Phase in die Verfahrensstufe 1 zurückgeführt wird.

Im allgemeinen erfolgt die Phasentrennung so, daß man die Reaktionsmischung aus der Verfahrensstufe 1 in ein Trenngefäß überführt; nach Entmischung der Phasen werden unter Druck die organischen Phasen entnommen und entspannt sowie die anorganischen Phasen (Sole und Hydrogencarbonat) ebenfalls entnommen und entspannt.

Während das abgezogene Kohlendioxid direkt in die Verfahrensstufe 1 zurückgeführt wird, geschieht dies mit der nach bekannten Trennverfahren (Filtrieren, Zentrifugieren) vom festen Natriumhydrogencarbonat befreiten wäßrigen Phase vorzugsweise erst nach einer Aufkonzentrierung mit Natriumchlorid (Verfahrensstufe 3). Das zunächst noch feuchte Natriumhydrogencarbonat wird gegebenenfalls nach gewissen Reinigungsoperationen entweder durch eine schonende Trocknung vom anhaftenden Wasser befreit oder calciniert, wobei das Wasser zusammen mit der abgespalteten Kohlensäure entfernt und im allgemeinen der Carbonisierungsstufe zugeführt wird.

Vor der Durchführung der eigentlichen Thermolyse (Verfahrensstufe 4) ist es möglich, aus der(n) organischen Phase(n) gegebenenfalls noch vorhandenes Wasser durch z. B. Destillation oder Rektifikation soweit wie möglich zu entfernen. Die Entfernung des Wassers ist allerdings nur dann erforderlich, wenn bei der folgenden Aminhydrochloridspaltung ausschließlich gasförmiger Chlorwasserstoff erhalten werden soll.

In der Verfahrensstufe 4 wird schließlich die gegebenenfalls wasserfreie organische Phase zwecks Abspaltung von Chlorwasserstoff aus dem Aminhydrochlorid erhitzt. Bei der Durchführung der thermischen Zerlegung des Aminhydrochlorids kann man z. B. am Rückfluß (DE-C-2 633 640) arbeiten oder so vorgehen, wie es in der DE-A-2 805 933 beschrieben ist.

Gemäß dem Verfahren der DE-C-2 633 640 wird dabei die gegebenenfalls noch freies Amin enthaltende Lösung des Aminhydrochlorids in einem mit einer Kolonne versehenen Behälter zum Sieden gebracht, wobei es erforderlich ist, daß das Lösemittel bzw. das Lösemittelgemisch 20 oder mehr °C niedriger als das Amin siedet. Am Kopf der Kolonne werden die vornehmlich aus dem Lösemittel bzw. den Lösemitteln bestehenden Brüden auf übliche Weise kondensiert und der Kolonne als Rückfluß wieder zugeführt, wobei der in den Brüden enthaltene und vom kondensierten Lösemittel nicht gelöste Chlorwasserstoff zugleich aus der Kondensationszone entweicht.

Eine bevorzugte Ausführungsform des erfindungsgemäßen Verfahrens besteht darin, daß man in der Spaltkolonne mit einer größeren Lösemittelmenge arbeitet als bei der Carbonisierung, um somit die thermische Belastung des Amins in der Kolonne möglichst niedrig zu halten.

Nach dem Verfahren der DE-A-2 805 933 wird der Chlorwasserstoff aus dem Aminhydrochlorid dadurch gewonnen, daß man dieses in dem organischen Lösemittel bzw. Lösemittelgemisch unter Durchleiten eines inerten Gasstroms auf 100 bis 250°C erhitzt. Die Innerhalb dieses Temperaturbereichs günstigste Temperatur ist von der Art und Menge sowohl des Amins wie des Lösemittels bzw. Lösemittelgemisches abhängig. Es ist vorteilhaft, wenn das Lösemittel bzw. Lösemittelgemisch bei der Spalttemperatur einen relativ niedrigen Dampfdruck hat, d. h. sein Siedepunkt soll mindestens 20°C über der Spalttemperatur liegen, um den Austrag als Dampf im Inertgasstrom möglichst niedrig

zu halten.

Aus dem Chlorwasserstoff-Inertgas-Gemisch kann der Chlorwasserstoff leicht auf bekannte Art, z. B. Adsorption, rein hergestellt werden, jedoch ist dies je nach Verwendungszweck des Chlorwasserstoffs nicht in allen Fällen erforderlich. Verwendet man z. B. als Trägergas Ethylen, dann kann das erhaltene Gasgemisch direkt zur Synthese von Chlorethanen eingesetzt werden.

Eine bevorzugte Ausführungsform des erfindungsgemäßen Verfahrens besteht schließlich darin, daß man bereits kleine Mengen von Verunreinigungen, wie z. B. primäre und sekundäre Amine, die vor allem durch die thermische Beanspruchung des tertiären Amins während der Thermolyse entstehen, aus dem Sumpf der Verfahrensstufe 4 entfernt, bevor man ihn wieder an geeigneter Stelle in das Verfahren einbringt.

Die Abtrennung der unerwünschten Verunreinigungen kann z. B. so erfolgen, wie es in den deutschen Patentanmeldungen DE-A-2 834 252 und DE-A-2 921 916 beschrieben wird. Im Falle des Verfahrens der DE-A-2 834 252 wird dabei das Gemisch aus Amin, Lösemittel und gegebenenfalls Verunreinigungen ganz oder teilweise über ein Adsorptionsmittel, wie z. B. Aluminiumoxid, Kieselgel oder silanisiertes Kieselgel, geleitet. Bei dem Verfahren der DE-A-2 921 916 inaktiviert man dagegen die gebildeten primären und sekundären Amine durch Reaktion mit Carbonsäurechloriden.

Das erfindungsgemäße Verfahren kann sowohl diskontinuierlich als auch kontinuierlich durchgeführt werden.

Das bei dem erfindungsgemäßen Verfahren gewonnene Natriumhydrogencarbonat wird in erster Linie zur Herstellung von Soda, der daneben anfallende Chlorwasserstoff zur Herstellung von Salzsäure oder Chlorkohlenwasserstoffen, wie z. B. Vinylchlorid, verwendet.

Das erfindungsgemäße Verfahren kann auch für die Herstellung von Kaliumhydrogencarbonat und Chlorwasserstoff aus Kaliumchlorid und Kohlensäure eingesetzt werden. Für diese Maßnahme wird jedoch im Rahmen der vorliegenden Erfindung kein Schutz begehrt.

Alle Prozentangaben — auch in den nachfolgenden Beispielen, die das erfindungsgemäße Verfahren erläutern — sind, sofern nicht anders angegeben, Gewichtsprozente.

## Beispiel 1

In einem mit einem Turbinenrührer ausgestatteten Autoklav von 300 ml Inhalt werden 30 g Dodecan, 18 g Tri-n-octyl-amin, was 38 Gewichtsprozent Amin in der zugesetzten organischen Phase entspricht, und 35 g einer gesättigten Kochsalzlösung zuzüglich 7 g festes NaCl auf 2°C durch Mantelkühlung abgekühlt und unter Rühren (800 $min^{-1}$) mit 30 bar $CO_2$ 20 Minuten lang beaufschlagt. Hiernach wird der Rührer abgestellt, der Autoklav entspannt, der gesamte Inhalt in einen Scheidetrichter geschüttet und nach Trennung der Phasen in der oberen, organischen Phase der Gehalt an Chlorwasserstoff durch acidimetrische Titration eines aliquoten Teiles bestimmt. Bezüglich der Gesamtmenge des eingesetzten Amins ergibt sich, wenn man Mole HCl pro Mol Amin rechnet, ein Umsatz von 57%.

## Beispiel 2

Bei gleicher Versuchsführung wie unter Beispiel 1, aber mit jeweils 30 g Mischung der angegebenen Teile Dodecan als unpolarem und Diphenylether als polarem Lösungsmittel, ergeben sich in Abhängigkeit der Mischungsverhältnisse die in der Tabelle aufgeführten Umsätze, wobei die vorteilhafte Wirkung des Ethers gut zu erkennen ist.

| Gewichtsanteil | | Umsatz |
|---|---|---|
| Diphenylether | Dedecan | % |
| 0 | 1 | 57 |
| 1 | 4 | 65 |
| 1 | 1 | 78 |
| 4 | 1 | 89 |

## Beispiel 3

Der Einfluß der NaCl-Konzentration der wäßrigen Phase wird im folgenden verdeutlicht. Bei gleicher Versuchsführung wie im Beispiel 1 mit Diphenylether und Dodecan von 1 : 1 ergibt sich bei Einsatz einer nur 20%igen Kochsalzlösung ein Umsatz von 58%.

Beispiel 4

Der Einfluß verschiedenen $CO_2$-Drucks bei Anwendung unterschiedlich starker NaCl-Konzentration der wäßrigen Phase soll hier verdeutlicht werden. Bei gleicher experimenteller Durchführung wie im Beispiel 1 mit Einsatz einer 34 Gewichtsprozent Tri-n-octylamin enthaltenden Mischung Diphenylether zu Dodecan von 1 : 1 ergeben sich folgende Umsätze:

| Kochsalzlösung | $CO_2$-Druck [$bar_{abs}$] | Umsatz [%] |
|---|---|---|
| 25 Gew.-% | 10 | 25 |
| 25 Gew.-% | 30 | 70 |
| gesättigt + Bodenkörper | 10 | 26 |
| gesättigt + Bodenkörper | 30 | 76 |

Beispiel 5

Das Beispiel beschreibt die Phasentrennung unter Beibehaltung des in der Reaktionsstufe 1 angewandten $CO_2$-Drucks.

Ein unter Betriebsbedingungen ca. 350 ml fassendes Druckgefäß mit Rührer, Zulaufstutzen für die flüssigen Phasen, Zuführungsstutzen für $CO_2$ und Ablaufstutzen für alle Phasen wird als kontinuierlicher Rührkessel betrieben. Pro Stunde werden 500 ml einer wäßrigen Kochsalzlösung, 500 ml einer Mischung aus 34 Gewichtsprozent Tri-n-octylamin, 33 Gewichtsprozent Diphenylether und 33 Gewichtsprozent Dodecan durchgesetzt und mit $CO_2$ von 30 bar zur Reaktion gebracht. Die Phasen fließen durch einen Überlauf in ein unter gleichem $CO_2$-Druck stehendes Trenngefäß. An dessen oberem Stutzen kann die organische Phase und am unteren Stutzen die wäßrige Phase zusammen mit dem festen Hydrogencarbonat abgenommen werden.

Wird eine 25%ige Kochsalzlösung eingesetzt und beträgt die Reaktionstemperatur 2° C, so erhält man bei einer mittleren Verweilzeit der organischen Phase im Rührkessel von 20 Minuten nach Einstellung des stationären Betriebszustandes einen Umsatz von 69%.

Beispiel 6

Dieses Beispiel beschreibt die Abtrennung des in der organischen Phase gebundenen Chlorwasserstoffs.

Die organische Phase aus der Verfahrensstufe 2 wird in einen heizbaren Kolben, der mit einem Thermometer und einem absteigenden Kühler sowie mit einem Stutzen versehen ist, eingefüllt. Das anfallende Kondensat und die nichtkondensierbaren Anteile werden in eine Vorlage geleitet, die eine wäßrige Natronlauge bekannten NaOH-Gehalts enthält und gerührt wird. Hinter dem Kühler wird über einen Stutzen ca. 4 l Stickstoff pro Stunde zugeführt, um ein Zurücksteigen der Flüssigkeit aus der Vorlage zu verhindern. Dem Kolben wird über den Stutzen mittels einer Dosierpumpe so viel Lösungsmittel kontinuierlich zugeführt, daß der Stand konstant bleibt.

Eingesetzt werden 195 g der organischen Phase aus Beispiel 5. Nach Erreichen der Siedetemperatur geht zunächst eine kleine Menge Wasser/Lösemittel-Azeotrop über. Danach erst wird Chlorwasserstoff in großer Menge abgespalten. Die Verdampfungsgeschwindigkeit beträgt ca. 7,3 ml Destillat pro Minute. Nach Anfall von 73 ml Destillat sind 11% des Chlorwasserstoffs, nach 146 ml 18% und nach 292 ml 27% übergegangen.

Beispiel 7

Im folgenden wird ein Versuch zur kontinuierlichen Herstellung Natriumhydrogencarbonat und Chlorwasserstoff beschrieben.

Zur Durchführung der Carbonisierungsreaktion wird die im Beispiel 5 beschriebene Apparatur verwendet. Die organische Phase wird in ein Puffergefäß entspannt und kontinuierlich einer mit einem Dephlegmator versehenen Füllkörperkolonne (Höhe 2500 mm, Ø40 mm) in 3/4 der Höhe mit 850 ml/h zugeführt. Das miteingeschleppte Wasser wird am Kopf der Kolonne mit Hilfe einer Trennflasche aus dem Kondensat als wäßrige Salzsäure entfernt. (Die Entfernung des Wassers ohne HCl-Verlust kann

auch in einer vorgeschalteten Destillationsstufe erfolgen.) Der den Dephlegmator passierende Chlorwasserstoff wird zur Bilanzierung vermessen. Das den Sumpf der Kolonne verlassende Amin-Lösemittelgemisch wird durch ein Festbett aus 7000 g Aluminiumoxid (1000 mm, ∅100 mm) hindurch der Carbonisierungsreaktion wieder zugeleitet. Als organische Phase wird eine Mischung aus 1615 g Tri-n-octylamin, 3704 g Diphenylether und 3730 g Dodecan eingesetzt. Als wäßrige Phase wird eine 25 Gewichtsprozent NaCl enthaltende Kochsalzlösung verwendet. Die Carbonisierungsreaktion wird bei ca. 5° C und 30 bar $CO_2$-Druck durchgeführt.

Innerhalb einer Betriebszeit von 441 Stunden werden 4,2 kg Chlorwasserstoff und 10,3 kg Natriumhydrogencarbonat von 95,9% Reinheit erhalten.

Beispiel 8

In einem mit einem Turbinenrührer ausgestatteten Autoklav von 300 ml Inhalt werden 22 g N-Octyl-3,3,5-trimethyl-azacycloheptan (als Isomerengemisch mit N-Octyl-3,5,5-trimethyl-azacycloheptan), 22 g Dodecan und 45 g einer wäßrigen 25gewichtsprozentigen NaCl-Lösung durch Mantelkühlung auf 10° C abgekühlt und bei dieser Temperatur 60 Minuten mit $CO_2$ von 30 bar bei einer Rührerdrehzahl von 800 $Minuten^{-1}$ zur Reaktion gebracht. Hiernach wird der Rührer abgestellt, der Autoklav entspannt, der gesamte Inhalt in einen Scheidetrichter geschüttet und nach Trennung der Phasen der Chlorwasserstoff in der(n) organische(n) Phase(n) durch acidimetrische Titration bestimmt. Bezüglich der Gesamtmenge des eingesetzten Amins ergibt sich, wenn man Mole HCl pro Mol Amin rechnet, ein Umsatz von 74%.

Beispiel 9

Ersetzt man im Beispiel 8 das Dodecan durch eine Mischung aus 11 g Dodecan und 11 g Diphenylether, so ergibt sich ein Umsatz von 91%.

Beispiel 10

Arbeitet man wie im Beispiel 8 beschrieben und setzt eine Mischung aus 22,5 g N-Dodecyl-piperidin, 11 g Dodecan, 11 g Diphenylether und 45 g einer wäßrigen 25gewichtsprozentigen NaCl-Lösung ein, so erhält man einen Umsatz von 85%.

Beispiel 11

Dieses Beispiel beschreibt die Abtrennung des in der organischen Phase gebundenen Chlorwasserstoffs. Dabei geht man im allgemeinen so vor, daß die organische(n) Phase(n) aus der Verfahrensstufe 2 in einen heizbaren Kolben, der mit einem Thermometer und einem absteigenden Kühler sowie mit einem Stutzen versehen ist, eingefüllt wird. Das anfallende Kondensat und die nichtkondensierbaren Anteile werden in eine Vorlage geleitet, die eine wäßrige Natronlauge bekannten NaOH-Gehalts enthält und gerührt wird. Hinter dem Kühler wird über einen Stutzen ca. 4 l Stickstoff pro Stunde zugeführt, um ein Zurücksteigen der Flüssigkeit aus der Vorlage zu verhindern. Dem Kolben wird über den Stutzen mittels einer Dosierpumpe so viel Lösungsmittel kontinuierlich zugeführt, daß der Stand konstant bleibt.

Eingesetzt werden 180 g der organischen Phase gemäß Beispiel 1. Nach Erreichen der Siedetemperatur geht zunächst eine kleine Menge Wasser/Lösemittel-Azeotrop über. Danach erst wird Chlorwasserstoff in großer Menge abgespalten. Die Verdampfungsgeschwindigkeit beträgt ca. 8 ml Destillat pro Minute. Nach Anfall von 40 ml Destillat sind 10% des Chlorwasserstoffs, nach 130 ml 18,5% übergegangen.

**Patentansprüche**

1. Verfahren zur Herstellung von Natriumhydrogencarbonat und Chlorwasserstoff durch Umsetzung von Kohlendioxid mit einem Gemisch aus einer wäßrigen Natriumchloridlösung, einem tertiären Amin und einem organischen Lösemittel unter Druck und guter gegenseitiger Durchmischung, Trennung der anfallenden Phasen und Rückführung der vom ausgefällten Natriumhydrogencarbonat befreiten wäßrigen Phase nach Aufkonzentrierung mit Natriumchlorid in die Carbonisierungsstufe, dadurch gekennzeichnet, daß man als tertiäres Amin ein nicht aromatisches, das in der Summe der stickstoffgebundenen Liganden 14 bis 39 Kohlenstoffatome enthält und höchstens eine Methylgruppe aufweist, einsetzt und als organisches Lösungsmittel ein unpolares verwendet, die organische(n)

Phase(n) vom Wasser soweit wie möglich und/oder erforderlich befreit, den Rückstand erhitzt (Thermolyse), den Chlorwasserstoff abzieht und die dabei verbleibende Lösung des Amins der Carbonisierungsstufe zuführt.

2. Verfahren nach Anspruch 1, dadurch gekennzeichnet, daß man in der Carbonisierungsstufe neben dem unpolaren Lösemittel ein polares organisches Lösemittel mit einem Siedepunkt von >140°C einsetzt.

3. Verfahren nach den Ansprüchen 1 und 2, dadurch gekennzeichnet, daß man die Phasentrennung unter Druck durchführt.

4. Verfahren nach Anspruch 3, dadurch gekennzeichnet, daß man bei der Phasentrennung den gleichen Druck wie in der Carbonisierungsstufe anwendet.

5. Verfahren nach den Ansprüchen 1 bis 4, dadurch gekennzeichnet, daß man bei der Thermolyse mit unterschiedlichen Lösemittelmengen arbeitet.

6. Verfahren nach den Ansprüchen 1 bis 5, dadurch gekennzeichnet, daß man beim Auftreten von mehreren organischen Phasen nur die mit der größten Aminhydrochloridkonzentration der Thermolyse zuführt.

7. Verfahren nach den Ansprüchen 1 bis 6, dadurch gekennzeichnet, daß man aus dem bei der Thermolyse anfallenden Sumpf die entstandenen Abbauprodukte entfernt bzw. sie darin inaktiviert und das behandelte Sumpfprodukt in die Carbonisierungsstufe zurückführt.

## Claims

1. Process for the preparation of sodium bicarbonate and hydrogen chloride by reaction of carbon dioxide with a mixture of an aqueous sodium chloride solution, a tertiary amine and an organic solvent under pressure and whilst mixing the components thoroughly with one another, separation of the resulting phases and recycling of the aqueous phase, which has been freed from precipitated sodium bicarbonate, into the carbonation stage after the concentration of sodium chloride in this phase has been increased, characterised in that a non-aromatic tertiary amine which contains 14 to 39 carbon atoms in the total number of nitrogen-bonded ligands and has at most one methyl group is used as the tertiary amine and a non-polar solvent is used as the organic solvent, the organic phase(s) is/are as far as possible and/or as necessary freed from water, the residue is heated (thermolysis), the hydrogen chloride is stripped off and the amine solution which thereby remains is fed to the carbonation stage.

2. Process according to Claim 1, characterised in that, in addition to the non-polar solvent, a polar organic solvent with a boiling point of >140°C is employed in the carbonation stage.

3. Process according to Claims 1 and 2, characterised in that the phase separation is carried out under pressure.

4. Process according to Claim 3, characterised in that the same pressure as in the carbonation stage is used in the phase separation.

5. Process according to Claims 1 to 4, characterised in that the thermolysis is carried out with different amounts of solvent.

6. Process according to Claims 1 to 5, characterised in that, if several organic phases are obtained, only that with the highest amine hydrochloride concentration is fed to the thermolysis.

7. Process according to Claims 1 to 6, characterised in that the degradation products formed are removed from the bottom product obtained during thermolysis or they are inactivated therein and the treated bottom product is recycled to the carbonation stage.

## Revendications

1. Procédé pour la préparation d'hydrogénocarbonate de sodium et de chlorure d'hydrogène par réaction de dioxyde de carbone sur un mélange formé d'une solution aqueuse de chlorure de sodium, d'une amine tertiaire et d'un solvant organique, sous pression et avec bon brassage réciproque, par séparation des phases qui se forment et par recyclage à l'étape de carbonisation de la phase aqueuse débarrassée de l'hydrogénocarbonate de sodium qui a précipité, après concentration, avec du chlorure de sodium, ledit procédé étant caractérisé par le fait qu'on introduit, comme amine tertiaire, une amine non aromatique qui, dans la somme des motifs liés à l'azote, renferme de 14 à 39 atomes de carbone et présente au plus un groupe méthyle, et qu'on utilise, comme solvant organique, un solvant apolaire, qu'on débarrasse de l'eau la ou les phases organiques le plus complètement possible et/ou si nécessaire, qu'on chauffe le résidu (thermolyse), qu'on soutire le chlorure d'hydrogène et qu'on délivre à l'étape de carbonisation la solution de l'amine qui reste alors.

2. Procédé selon la revendication 1, caractérisé par le fait qu'à l'étape de carbonisation, on introduit, à côté du solvant apolaire, un solvant organique polaire présentant un point d'ébullition supérieur à 140°C.

3. Procédé selon les revendications 1 et 2, caractérisé par le fait qu'on effectue sous pression la séparation des phases.

4. Procédé selon la revendication 3, caractérisé par le fait que, lors de la séparation des phases, on applique la même pression que dans l'étape de carbonisation.

5. Procédé selon les revendications 1 à 4, caractérisé par le fait qu'à l'étape de thermolyse, on utilise de différentes quantités de solvant.

6. Procédé selon les revendications 1 à 5, caractérisé par le fait qu'au cas où il existe plusieurs phases organiques, on ne délivre à l'étape de thermolyse que celle ayant la concentration la plus haute en chlorhydrate d'amine.

7. Procédé selon les revendications 1 à 6, caractérisé par le fait qu'on enlève du produits de fond, qui s'est produit lors de l'étape de thermolyse, les produits de dégradation ou qu'on les y rend inactifs et qu'on recycle ce produit de fond traité à l'étape de carbonisation.